## Europäisches Patentamt

## European Patent Office

## Office européen des brevets

(19)

(11) Veröffentlichungsnummer: **0 087 635**
**B1**

(12) **EUROPÄISCHE PATENTSCHRIFT**

(45) Veröffentlichungstag der Patentschrift:
19.06.85

(51) Int. Cl.⁴: **C 23 G 5/00**, B 65 G 49/04

(21) Anmeldenummer: 83101262.0

(22) Anmeldetag: **10.02.83**

(54) **Verfahren zum Reinigen von Einzelteilen und Vorrichtung zur Durchführung des Verfahrens.**

(30) Priorität: **18.02.82 DE 3205816**

(43) Veröffentlichungstag der Anmeldung:
**07.09.83 Patentblatt 83/36**

(45) Bekanntmachung des Hinweises auf die Patenterteilung:
**19.06.85 Patentblatt 85/25**

(84) Benannte Vertragsstaaten:
**CH DE FR GB IT LI**

(56) Entgegenhaltungen:
**DE - A - 2 326 326**
**FR - A - 447 870**
**GB - A - 616 151**
**US - A - 2 181 503**
**US - A - 2 716 989**
**US - A - 3 910 297**

(73) Patentinhaber: **ROBERT BOSCH GMBH, Postfach 50,
D-7000 Stuttgart 1 (DE)**

(72) Erfinder: **Bross, Erwin, Berlinerstrasse 40,
D-7144 Asperg (DE)**
Erfinder: **Staudinger, Franz, Murmelstrasse 7,
D-7061 Berglen-Höslinswart (DE)**
Erfinder: **Tüchler, Theodor Jost,
Immanuei-Kant-Strasse 21, D-7251 Hemmingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung geht aus von einem Verfahren nach der Gattung des Hauptanspruchs. Einzelteile von aus mehreren derartigen Teilen zusammengesetzten Vorrichtungen durchlaufen während der Fertigung mehrere beispielsweise spanabhebende Fertigungsmaschinen und müssen zwischen den einzelnen Fertigungsschritten Reinigungsanlagen durchlaufen, welche die Einzelteile von Öl und Spänen befreien. Dabei ist es üblich, die einzelnen Teile nach einer solchen Fertigungsmaschine in speziellen Kästen zu sammeln oder auf Rahmen aufzustecken und sie dann einer zentralen Reinigungsanlage zuzuführen, die auch von anderen Stationen der Fertigungsstraße angesteuert werden kann. Eine derartige Reinigungsanlage besteht aus mehreren Stufen, wobei beispielsweise die Teile zunächst in Tri von Zimmertemperatur, dann in Tri von ca. 80° C, dann wiederum in Tri von Zimmertemperatur getaucht und schließlich in einer letzten Station in Tri-Dampf getrocknet werden. Sind nun die Einzelteile in Kästen eingelegt oder auf Rahmen aufgesteckt, so müssen diese Transportmittel jeweils mit aufgeheizt und abgekühlt werden, was einen unnötigen Energieverbrauch bedeutet und darüber hinaus noch relativ große Verschleppungsverluste von einem Bad ins andere mit sich bringt, da die Kästen normalerweise nicht vollständig leerlaufen können. Darüber hinaus wird der Materialfluß durch derartige zentrale Reinigungsanlagen unterbrochen und es müssen außerdem relativ große Wege der in den Transportmitteln befindlichen Einzelteile in Kauf genommen werden. Nach Durchlaufen der Reinigungsanlage müssen die Teile den Kästen wieder entnommen bzw. von den Rahmen abgenommen und in die nächste Fertigungsmaschine eingebracht werden. Die Kästen oder Rahmen müssen wieder an das Ende der vorhergehenden Fertigungsstation transportiert werden, um erneut Teile aufnehmen zu können.

Das erfindungsgemäße Verfahren mit den kennzeichnenden Merkmalen des Hauptanspruchs hat demgegenüber den Vorteil, daß sich die Reinigungsanlage ohne Schwierigkeiten mit dem Materialfluß verketten läßt, daß man eine derartige Anlage verhältnismäßig kompakt ausführen kann, so daß die Platzkosten niedrig gehalten werden können, daß eine Einsparung an Energie und eine Minimierung der Lösungsmittelverluste möglich ist. Die Verkettung in den Materialfluß macht deutlich, daß die Einzelteile nach Durchlaufen der gesamten Reinigungsanlage automatisch einem Magazin zugeführt werden, aus dem die Teile lagegerecht in Halterungen für den nächsten Fertigungsschritt ebenfalls automatisch eingeführt werden können. Die bisher üblichen zentralen Reinigungsanlagen in Form von Karussell- oder Längsreinigungsanlagen, die sehr viel Platz benötigen, werden überflüssig, so daß mit den zu bearbeitenden Teilen keine so langen Wege mehr zurückgelegt werden müssen. Mit Hilfe der Vorrichtung mit den kennzeichnenden Merkmalen des Vorrichtungsanspruchs ist es möglich, das Verfahren in einfacher Weise durchzuführen.

Besonders vorteilhaft ist es, wenn die einzelnen Körbe in der Behandlungsflüssigkeit Dreh- und/oder Wippbewegungen ausführen können, wozu sie an ihrem Arm einen Kettenantrieb aufweisen, über den die entsprechenden Bewegungen ausgeführt werden können.

Ein Ausführungsbeispiel der Erfindung ist in der Zeichnung schematisch dargestellt und in der nachfolgenden Beschreibung näher erläutert. Es zeigen Figur 1 eine schematische Ansicht einer Reinigungsanlage, Figur 2 einen schematischen Schnitt durch einen Korb und Figur 3 einen Schnitt durch eine andere Ausführungsform eines Korbes.

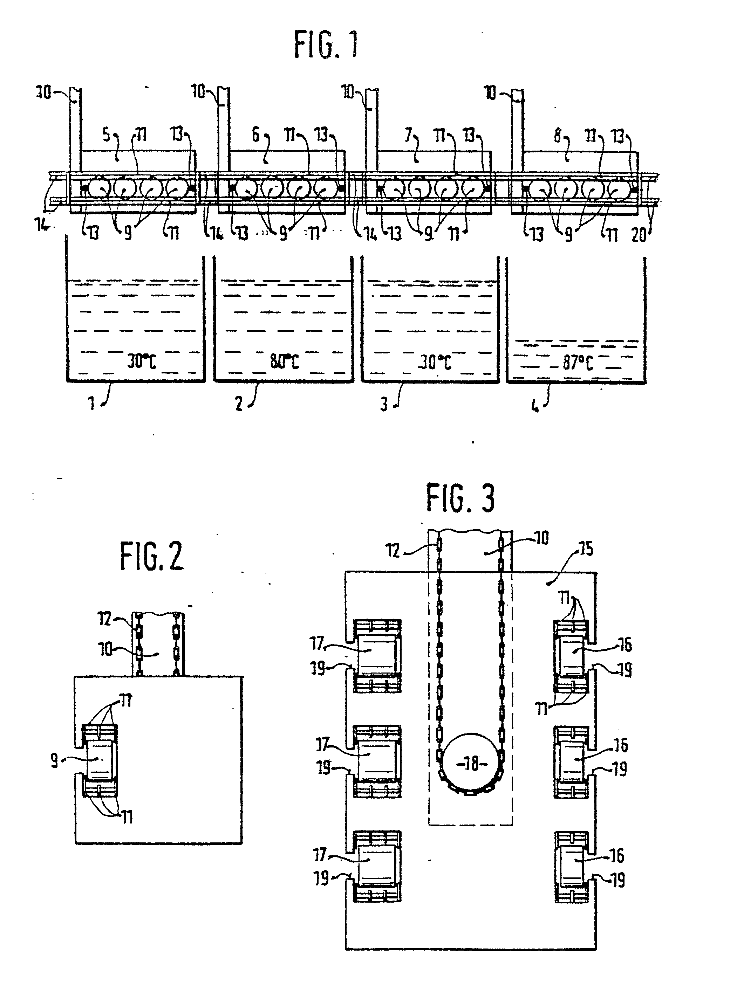

Die in Figur 1 schematisch dargestellte Reinigungsanlage weist vier Behälter 1 bis 4 auf. In den Behältern 1 bis 3 befindet sich so viel Trichloräthylen, daß die zu reinigenden Teile darin eingetaucht werden können, während im Behälter 4 sich das Trichloräthylen nur am Boden befindet, damit die Teile nur mit dem Dampf in Berührung kommen. Im Behälter 1 weist das Reinigungsmittel eine Temperatur von 30° C auf, um von den Teilen die vorhandene Wasser-Öl-Emulsion und auch den wesentlichen Teil des Wassers zu entfernen. Im Behälter 2 hat das Reinigungsmittel eine Temperatur von 80° C, um das Öl vollständig entfernen zu können, während das Reinigungsmittel im Behälter 3 wiederum eine Temperatur von etwa 30° hat, um die Teile nachzureinigen und sie vor allem abzukühlen, um in dem Behälter 4, in dem die Teile mit Trichloräthylendampf gereinigt werden, eine längere Kondensationszeit zu ermöglichen. Zu jedem der Behälter 1 bis 4 gehört je ein Korb 5 bis 8, in welchem sich die zu behandelnden Teile 9 befinden. Jeder der Körbe 5 bis 8 ist an einem Arm 10 befestigt, an welchem die Körbe in die Bäder abgesenkt werden können. In den Körben sind die Einzelteile 9 zwischen Schienen 11, die beispielsweise aus Flacheisen bestehen, derart angeordnet, daß sie auf der einen Seite sicher geführt und gehalten, auf der anderen Seite aber ohne großen Kraftaufwand beweglich sind. Wie in Figur 2 dargestellt, verläuft in jedem der Arme 10 eine Kette 12, die es ermöglicht, während des Reinigungsvorgangs die Körbe 5 bis 8 in Drehbewegungen zu versetzen, gleichzeitig erfolgt eine Wippbewegung aller Körbe 5 bis 8, um einen gleichmäßigen Reinigungseffekt zu erzielen. Damit die Teile 9 während des Reinigungsprozesses nicht aus den Körben 5 bis 8 herauswandern können, sind sie in den Körben durch Arretierungsstifte 13 gesichert. Zwischen den Körben 5 bis 8 sowie vor dem Korb 5 sind Schienenübergangsstücke 14 angeordnet, die ortsfest mit der ganzen Anlage verbunden sind und ein Weiterschieben der Teile 9 von einem Korb zum anderen ermöglichen. Hinter dem Korb 8 sind, ebenfalls ortsfest montiert, Abgabeschienen 20 angeordnet.

In den Figuren 1 und 2, die lediglich schematische Darstellungen zeigen, sind die Einzelteile 9 nur in einer Ebene in den Körben 5 bis 8 angeordnet. Figur 3 zeigt nun einen Korb 15, in welchem zwei verschiedene Arten von Teilen 16 und 17 behandelt werden können, wobei jede der zwei Arten in drei Ebenen übereinander angeordnet ist. In Figur 3 ist auch noch der Arm 10 sowie die Kette 12 angedeutet, wobei diese Kette über eine Achse 18 die oben bereits genannten Drehbewegungen ermöglicht. In Figur 3 sind noch Ausnehmungen 19 dargestellt, deren Bedeutung weiter unten beschrieben wird.

Bei dem in Figur 1 schematisch dargestellten Zustand befinden sich die Körbe 5 bis 8 in ihrer höchsten Position, und sie werden nun in dem bei der Gesamtanlage vorgeschriebenen Takt in die Behälter 1 bis 4 abgesenkt und dort der Reinigungsflüssigkeit bzw. dem Dampf ausgesetzt. Nach der erwähnten Taktzeit werden die Körbe wieder in die dargestellte Position gehoben, und an die Stelle der Arretierungsstifte 13 werden nun Stifte eines nicht dargestellten, sogenannten Transfer-Rechens eingeschoben und — in der Figur 1 — dieser Rechen um eine Taktbreite nach rechts verschoben, so daß die Teile 9 aus dem Korb 5 in den Korb 6, aus dem Korb 6 in den Korb 7 und aus dem Korb 7 in den Korb 8 gelangen und so in der jeweils nächsten Reinigungsstation behandelt werden können. Die Teile 9 aus dem Korb 8 gelangen auf die Abgabeschienen 20, von wo aus sie in die nächste Fertigungsmaschine übergeführt werden. Vor dem Korb 5 werden die in diesen Korb einzuschiebenden Teile auf einer Schienenführung in ein nicht dargestelltes Vormagazin geführt, aus welchem sie beispielsweise ebenfalls mit Hilfe des erwähnten Transfer-Rechens in den Korb 5 eingeschoben werden. Die in Figur 3 dargestellten Ausnehmungen 19 ermöglichen, daß die Stifte des Transfer-Rechens die Einzelteile (9, 16 bzw. 17) in der beschriebenen Weise verschieben können. Nachdem der Transfer-Rechen die erwähnte Überführung der Teile 9 bewerkstelligt hat, werden die Stifte des Rechens wieder herausgezogen, wobei gleichzeitig die Arretierungsstifte 13 wieder in Funktion treten. Der Transfer-Rechen wird sodann wieder in seine ursprüngliche Lage zurückgeführt, um beim nächsten Takt wieder in Aktion treten zu können.

Da die Anordnung der Schienen 11 und der Schienenübergangsstücke 14 sowie der Abgabeschienen 20 von Teiletyp zu Teiletyp unterschiedlich ist und jedem Teiletyp angepaßt sein muß, ist es klar, daß die Anwendung des beschriebenen Verfahrens sich auf solche Fälle beschränkt, in denen große Serien gleicher Teiletypen zu behandeln sind. Auch hängt die Anzahl der sich in einer Ebene eines Korbes befindlichen Teile von der Größe der Teile im Verhältnis zur Größe des Korbes und vom gesamten Durchsatz ab, der seinerseits wiederum abhängig ist von der Art der Behandlungsstationen, die vor und nach der Reinigungsanlage angeordnet sind.

Wie oben bereits ausgeführt, werden bei dem erfindungsgemäßen Verfahren lediglich die zu behandelnden Einzelteile aufgeheizt und abgekühlt, da nur die Teile selbst von einer Reinigungsstation zur anderen befördert werden und jeder Reinigungsstation ein bestimmter Korb zugeordnet ist, so daß dieser Korb im wesentlichen immer die gleiche Temperatur beibehält. Im Gegensatz dazu wird bei den herkömmlichen Reinigungsanlagen das Transportmittel für die Einzelteile wie Kästen oder Rahmen zusammen mit den Einzelteilen durch die ganze Reinigungsanlage transportiert, so daß auch diese Transportmittel aufgeheizt und abgekühlt werden müssen. Eine Rechnung hat ergeben, daß aufgrund dieses Unterschiedes bis zu 70% der für eine herkömmliche Anlage benötigten Energie eingespart werden kann. Durch die bei den herkömmlichen Anlagen auftretenden großen Verschleppungsverlusten an Lösungsmittel können darüber hinaus bis zu 50% Lösungsmittel eingespart werden. Durch die Möglichkeit der Integration der Reinigungsanlage in den gesamten Materialfluß ist eine praktisch vollständige Verkettung des Verfahrensablaufs und damit ein hoher Automatisierungsgrad möglich.

**Patentansprüche**

1. Verfahren zum Reinigen von Einzelteilen, die nacheinander eine aus mehreren Reinigungsstationen bestehende Reinigungsanlage durchlaufen, dadurch gekennzeichnet, daß eine vorbestimmte Anzahl der Einzelteile (9, 16, 17) innerhalb jeder Reinigungsstation in einen der Reinigungsstation zugeordneten Korb (5 bis 8) eingebracht wird, indem taktweise und gleichzeitig die bereits behandelten Teile ausgeschoben und gegebenenfalls in den nächsten Korb eingeschoben und die zu behandelnden Teile in den Korb eingeschoben werden und die Körbe (5 bis 8) anschließend in die zugehörigen Behälter (1 bis 4) abgesenkt werden.

2. Verfahren nach Anspruch 1, dadurch gekennzeichnet, daß die Einzelteile (9, 16, 17) in den Körben (5 bis 8) zwischen Schienen (11) geführt werden.

3. Verfahren nach Anspruch 1, dadurch gekennzeichnet, daß die Körbe (5 bis 8) in den Behältern (1 bis 4) Dreh- und/oder Wippbewegungen ausführen.

4. Verfahren nach Anspruch 1, dadurch gekennzeichnet, daß die Einzelteile (9, 16, 17) zwischen den Reinigungsstationen auf fest mit der Gesamtanlage verbundenen Schienen-Übergangsstücken (14) geführt werden.

5. Verfahren nach Anspruch 4, dadurch gekennzeichnet, daß die Einzelteile (9, 16, 17) während des Reinigungsvorgangs in den Körben (5 bis 8) beidseitig arretiert werden.

6. Vorrichtung zur Durchführung des Verfahrens nach einem der Ansprüche 1 bis 5, dadurch gekennzeichnet, daß jede Reinigungsstation einen Korb (5 bis 8) aufweist, der Schienen (11) zur Aufnahme der Einzelteile (9, 16, 17) trägt, und daß zwischen den einzelnen Körben (5 bis 8) Schienen-Übergangsstücke (14) angeordnet sind, die ortsfest mit der gesamten Anlage verbunden sind.

7. Vorrichtung nach Anspruch 6, dadurch gekennzeichnet, daß jeder der Körbe (5 bis 8) Schienenanordnungen (11) zur Aufnahme von mindestens zwei Reihen Einzelteile (16, 17) übereinander und/oder mindestens zwei Reihen Einzelteile (16, 17) nebeneinander aufweist und daß zwischen den Körben (5 bis 8) entsprechende Schienen-Übergangsstücke (14) angeordnet sind, die ortsfest mit der Anlage verbunden sind.

## Claims

1. Method of cleaning components passing in succession through a cleaning plant consisting of a pluraility of cleaning stations, characterised in that a predetermined number of components (9, 16, 17) are introduced, within each cleaning station, into a basket (5 to 8) associated with the cleaning station, in that cyclically and simultaneously the previously treated parts are ejected and optionally inserted into the next basket and the parts which are to be treated are inserted into the basket, and the baskets (5 to 8) are thereupon lowered into the appertaining containers (1 to 4).

2. Method according to Claim 1, characterised in that the components (9, 16, 17) are guided between rails (11) in the baskets (5 to 8).

3. Method according to Claim 1, characterised in that the baskets (5 to 8) perform rotary and/or rocking movements in the containers (1 to 4).

4. Method according to Claim 1, characterised in that the components (9, 16, 17) are guided between the cleaning stations on rail transition pieces (14) fastened to the entire plant.

5. Method according to Claim 4, characterised in that the components (9, 16, 17) are secured on both sides in the baskets (5 to 8) during the cleaning process.

6. Apparatus for applying the method according to one of Claims 1 to 5, characterised in that each cleaning station has a basket (5 to 8) carrying rails (11) to receive the components (9, 16, 17), and that between individual baskets (5 to 8) rail transition pieces (14) are disposed and are secured in position by connection to the entire plant.

7. Apparatus according to Claim 6, characterised in that each of the baskets (5 to 8) has rail arrangements (11) to receive at least two rows of components (16, 17) one above the other and/or at least two rows of components (16, 17) side by side, and that between the baskets (5 to 8) corresponding rail transition pieces (14) secured in position by connection to the plant are disposed.

## Revendications

1. Procédé pour nettoyer des pièces détachées, qui parcourent l'une après l'autre une installation de nettoyage constituée de plusieurs postes de nettoyage, procédé caractérisé en ce qu'un nombre prédéterminé de pièces détachées (9, 16, 17) est introduit à l'intérieur de chaque poste de nettoyage dans un panier (5 à 8) associé à ce poste de nettoyage, du fait que cycliquement et simultanément, les pièces déjà traitées sont expulsées et éventuellement introduites dans le panier suivant, tandis que les pièces à traiter sont introduites dans le panier considéré, et les paniers (5 à 8) sont ensuite descendus dans les récipients (1 à 4) auxquels ils sont associés.

2. Procédé selon la revendication 1, caractérisé en ce que les pièces détachées (9, 16, 17) sont guidées dans les paniers (5 à 8) entre des rails (11).

3. Procédé selon la revendication 1, caractérisé en ce que les paniers (5 à 8) effectuent dans les récipients (1 à 4) des mouvements de rotation et/ou de bascule.

4. Procédé selon la revendication 1, caractérisé en ce que les pièces détachées (9, 16, 17) sont guidées entre les postes de nettoyage sur des parties de rail de transition (14) reliées à poste fixe à l'ensemble de l'installation.

5. Procédé selon la revendication 4, caractérisé en ce que les pièces détachées (9, 16, 17) pendant le processus de nettoyage sont arrêtées des deux côtés dans les paniers (5 à 8).

6. Dispositif pour la mise en oeuvre du procédé selon une des revendications 1 à 5, caractérisé en ce que chaque poste de nettoyage comporte un panier (5 à 8), portant des rails (11) pour recevoir les pièces détachées (9, 16, 17) et que, entre les différents paniers (5 à 8) sont disposées des parties de rail de transition (14), reliées à poste fixe avec l'ensemble de l'installation.

7. Dispositif selon la revendication 6, caractérisé en ce que chacun des paniers (5 à 8) comporte des ensembles de rails (11) pour recevoir au moins deux rangées de pièces détachées (16, 17) superposées et/ou au moins deux rangées de pièces détachées (16, 17) juxtaposées, et que, entre les paniers (5 à 8) sont disposées les parties de rail de transition (14) correspondantes qui sont reliées à poste fixe avec l'installation.

# FIG. 1

# FIG. 2

# FIG. 3